# EUROPÄISCHE PATENTSCHRIFT

(11) **EP 0 918 226 B1**
(45) Veröffentlichungstag und Bekanntmachung des Hinweises auf die Patenterteilung: **20.02.2002**
(21) Anmeldenummer: 98121898.5
(22) Anmeldetag: 18.11.1998
(51) Int. Cl.: G01R 31/28, G02F 1/1333

(54) **Anordnung zur Funktionskontrolle einer Anzeigeanordnung**
Device for checking the functioning of a display device
Dispositif de vérification fonctionnelle d'un dispositif d'affichage

(30) Priorität: 21.11.1997 DE 19751675
(43) Veröffentlichungstag der Anmeldung: 26.05.1999
(73) Patentinhaber: AEG Gesellschaft für moderne Informationssysteme mbH, 89077 Ulm (DE)
(72) Erfinder: Bitter, Thomas, 73342 Bad Ditzenbach (DE); Bader, Otto, 88447 Warthausen-Birkenhard (DE)
(74) Vertreter: Weber, Gerhard

(56) Entgegenhaltungen:
- EP-A- 0 173 931
- GB-A- 2 277 418

## Beschreibung

Die Erfindung betrifft eine Anzeigeanordnung nach dem Oberbegriff des Patentanspruchs 1.

Derartige Anzeigeanordnungen sind beispielsweise als großflächige Anzeigetafeln in verschiedenen Anwendungsfällen im Einsatz. Die insbesondere gebräuchlichen Anzeigeelemente in Form von Leuchtdioden oder Flüssigkristallzellen weisen zwar eine hohe mittlere Lebensdauer auf, sind aber dennoch nicht gegen Ausfälle einzelner oder mehrerer Elemente sicher.

Aus der DE 24 42 889 A1 ist eine Anordnung zur visuellen Überprüfung einzeln ansteuerbarer Anzeigelampen bekannt, bei welcher die Lampen zusätzlich über einen gemeinsamen Prüfkreis aktivierbar sind. Bei einer aus der DE 40 36 521 A1 bekannten Anordnung wird eine durchgehende leitfähige Elektrode einer Mehrsegment-LCD-Anzeige eine Testspannung eingekoppelt, welche bei Segmenten mit defekten Zuleitungen zu einer blinkenden Darstellung führt. Die bei diesen Anordnungen erforderliche visuelle Funktionsprüfung ist in vielen Einsatzfällen nicht regelmäßig möglich.

Die EP 0 518 068 A1 beschreibt die Überprüfung einer Anzeige durch Vergleich des Bildmusters gruppenweise angesteuerter Segmente mit einem gespeicherten Muster. Die Anzeige wird hierzu mit einer Kamera oder dgl. aufgenommen.

Aus der EP 0 173 931 A2 ist ein Verfahren nebst einer Schaltungsanordnung für eine permanente, visuelle Kontrolle der Funktion von Standard-LCDs bekannt. Dabei ist an alle Segmentelektroden ein redundant zugeführtes Kontrollsignal angelegt, welches an die Segment- und Rückelektroden angelegte Netzsignale überlagert und bei einer Unterbrechung des Nutzsignals das betroffene Segment blinken läßt. Für die getrennte Zuführung des Kontrollsignals ist eine separate, hochohmige Zuleitung vorgesehen, die gemeinsam an alle Segmentelektroden geführt ist.

Die GB 22 77 418 A beschreibt eine Fehlererkennungsschaltung für LCD-Anzeigen, welche die Kapazität der einzelnen Segmente der Anzeige gegen die gemeinsame Rückelektrode ausnutzt. Durch Anlegen einer Treiberspannung wird die Segmentelektrode auf eine bestimmte Anfangsspannung aufgeladen und danach von der Treiberstufe isoliert. Über einen Lastwiderstand wird die Kapazität zwischen Segmentelektrode und Rückseitenelektrode langsam entladen und über einen Komparator wird nach einem vorgegebenen Entladeintervall die Spannung der Segmentelektrode gegen die Rückseitenelektrode mit einer Referenzspannung verglichen.

Die DE 30 26 848 C2 zeigt eine Überwachungsschaltung zur Kontrolle der Anschlüsse von LCD-Anzeigen und der zugehörige Segment-Treiberstufen, bei welcher zu jeder Segmentelektrode zwei Zuleitungen führen, von denen die eine mit einem für jedes Segment separate vorhandenen Prüfkondensator über die Reihenschaltung der beiden Zuleitungen und einen Widerstand entladen, wobei aus der Spannung am Widerstand und deren zeitlichem Verlauf eine Funktionsaussage über die segmentspezifischen Zuleitungen und Treiberschaltungen ermöglicht.

Der vorliegenden Erfindung liegt die Aufgabe zugrunde, eine Anzeigeanordnung mit einer Mehrzahl von Anzeigeelementen anzugeben, bei welcher Funktionsausfälle ohne aufwendige optische Überprüfung möglich sind.

Die Erfindung ist im Patentanspruch 1 beschrieben. Die Unteransprüche enthalten vorteilhafte Ausgestaltungen und Weiterbildungen der Erfindung.

Durch die in der Anzeigeanordnung integrierten Prüfeinrichtungen kann vorteilhafterweise fortlaufend oder in vorgebbaren Zeitabständen eine Prüfung der einzelnen Anzeigeelemente vorgenommen werden und die Prüfergebnisse können ausgedruckt, gespeichert, vorzugsweise aber auf Abruf oder automatisch unmittelbar anschließend an die Funktionsprüfung an eine entfernte Auswertestelle übertragen werden, wo dann eine Entscheidung über evtl. notwendige Instandsetzungsmaßnahmen getroffen werden kann.

Eine größere Anzeigeanordnung kann zu mehrere Anzeigegruppen mit jeweils separaten Prüfeinrichtungen oder Teilen davon unterteilt sein. Die Überlegungen gelten dann für die einzelnen Gruppen in gleicher Weise. Die Aufgaben der Prüfeinrichtungen können auch teilweise gruppenzugeordnet und teilweise zentral für die gesamte Anordnung aufgeteilt sein.

Die Aufteilung von Zuleitungen in Teilleitungen gemäß einer bevorzugten Ausführungsform macht sich die Erkenntnis zunutze, daß die Ausfälle von einzelnen Anzeigeelementen im Regelfall auf Störungen im Bereich von Zuleitungen zurückzuführen sind, beispielsweise durch Korrosions- oder Ätzprozesse insbesondere an Stellen mit Materialwechseln, und selten auf einem Defekt. des Anzeigeelements selbst beruhen. Die Aufteilung einer Zuleitung bietet zum einen eine vorteilhafte Möglichkeit der Funktionskontrolle durch Prüfung der Serienschaltung zweier Teilleitungen auf Stromdurchgang, zum anderen kann ein allmählich fortschreitender Degradationsprozeß, bei welchem Teilleitungen nacheinander ausfallen, so frühzeitig erkannt werden, daß zwar bereits ein Funktionsausfall detektiert wird, das Anzeigeelement aber über eine intakte Teilleitung noch steuerbar ist. Bei mehr als zwei Teilleitungen einer Zuleitung kann bei einem solchen fortschreitenden Degradationsprozeß sogar eine Schätzung des voraussichtlichen Ausfalls aller Zuleitungen extrapoliert werden. Die Instandhaltung wird dadurch vereinfacht, weil sowohl bereits ausgefallene als auch erkennbar von einem baldigen Ausfall bedrohte Anzeigeelemente in einem Zug ersetzt werden können. Die Annahme eines räumlich sich ausbreitenden Korrosionsprozesses kann auch in der Weise berücksichtigt werden, daß ein Element nach Wegfall einer Teilleitung als gefährdet und nach Auftreten eines Defekts.an einer benachbarten Zuleitung als ausgefallen bewertet wird.

Vorteilhafterweise werden festgestellte Defekte an einzelnen Segmenten bei der Steuerung der Anzeigeanordnung durch Umverteilung des Anzeigeinhalts auf andere Anzeigen der Anordnung oder andere Flächenbereiche einer Anzeige berücksichtigt wobei eine Prüfung vorangehen kann, ob die festgestellten Defekte die Anzeige unzulässig verfälschen oder lediglich hinnehmbar beeinträchtigen.

Jede Teilleitung ist mit einem separaten Ausgang einer Ansteueranorndung verbunden. Die Aufteilung der Zuleitungen und deren Prüfung ist insbesondere bei solchen Anzeigeelementen mit besonders geringem Zusatzaufwand zu realisieren, bei welchen zur Erbringung der Steuerleistung für ein Anzeigeelement ohnehin Ansteuerungsanordnungen mit zwei oder mehr parallel geschalteten Ausgängen je Anzeigeelement vorhanden sind. Für die Prüfung können dann vorteilhafterweise die für die Aussteuerung auf gleichem Potential liegenden Ausgänge auf verschiedene Potentiale gelegt und damit hinsichtlich der wesentlichen Funktion von einer Parallelschaltung auf eine Reihenschaltung umgestellt werden. Der dann zwischen den auf unterschiedlichen Potentialen liegenden Ausgängen über die Serienschaltung der Teilleitungen und deren elementseitigem Verbindungspunkt fließende Strom kann für die Prüfung ausgewertet werden. Anstelle des Stroms kann auch die Veränderung einer Spannung oder einer Kombination von Strom und Spannung gemessen werden. Die Aussteuerungen können beispielsweise Treiberbausteine, ASICs oder dergleichen enthalten, mittels derer die einzelnen Teilleitungen individuell auswählbar sind.

Die Erfindung ist prinzipiell auf alle üblichen Anzeigetypen wie Leuchtdioden, Flüssigkristall-Anzeigen, Elektrolumineszenz-Anzeigen, Vakuumfluoreszenz-Anzeigen, Plasma-Displays usw anwendbar, in einer bevorzugten Ausführungsform aber besonders vorteilhaft für Flüssigkristall-Anzeigen (LCD), bei welchen die mehreren Anzeigeelemente in Form von Matrixpunkten oder unregelmäßig aufgeteilten Flächensegmenten eine gemeinsame großflächige Gegenelektrode und individuelle Steuerleitungen zu den einzelnen Flächensegmenten aufweisen. Für die Funktionskontrolle der einzelnen Anzeigeelemente brauchen dann nur die Zuleitungen zu den einzelnen Segmenten überprüft zu werden. Eine zusätzliche Überprüfung der gemeinsamen Gegenelektrode ist nach demselben Prinzip möglich. Die Aufteilung der Zuleitungen in Teilleitungen erstreckt sich vorteilhafterweise bis in das Innere der Flüssigkristall-Anzeige, vorzugsweise bis in den geriebenen Bereich des Substrats bzw. in ein Anzeigeelement (Pixel) hinein und erfaßt dadurch alle Punkte der Zuleitung mit Materialwechseln und/oder Verbindungsstellen.

Eine besonders vorteilhafte Maßnahme zur Durchführung der Prüfung der Einzelelemente nutzt für die Prüfung eine einer Gruppe von Elementen zugeordnete elektrische Größe und mißt die Differenz dieser Größe zwischen einem Zustand mit individuellem Elementtest gegenüber einem vergleichbarem Zustand ohne Testsituation. Insbesondere kann der Betriebsstrom einer Anzeigeelementgruppe gemessen werden, wobei der Teststrom eines Anzeigeelements in der Testsituation als so verschieden gegenüber dem Betriebsstrom in der gewöhnlichen Betriebssituation gewählt ist, daß die Differenz auch in dem gesamten Betriebsstrom der Elementgruppe zuverlässig detektierbar ist. Dies ist insbesondere für LCD-Anzeigen vorteilhaft, die sich durch einen sehr niedrigen mittleren Betriebsstrom der Elemente auszeichnen. Ein quasi-Kurzschlußstrom zwischen zwei Ausgängen über zwei Teilleitungen und deren Verbindungspunkt eines einzelnen Segments führt dann zu einer detektierbaren Stromerhöhung. Der Vergleich mit einem Meßwert als Referenz eliminiert auch den Einfluß von unterschiedlichen Anzeigezuständen und Betriebstemperaturen und dergleichen. Testmessung und Referenzmessung erfolgen daher vorteilhafterweise in unmittelbar aufeinanderfolgenden Zeitintervallen, bei in Zyklen unterteilter Betriebsweise der Anzeige in aufeinanderfolgenden Zyklen.

Eine weitere Prüfmaßnahme, mit welcher auch unzulässige elektrische Verbindungen zwischen den Segmentelektroden und der gemeinsamen Gegenelektrode feststellbar sind, sieht vor, lediglich an ein zu prüfendes Segment eine Spannung anzulegen und die übrigen Segmente auf dasselbe Potential wie die Gegenelektrode zu legen.

Die zeitlich aufeinanderfolgende Überprüfung der einzelnen Anzeigelemente kann vorteilhafterweise während des laufenden Anzeigebetriebs durchgeführt werden, wobei die kurzzeitige Prüfung eines einzelnen Elements visuell kaum wahrzunehmen ist und damit nicht störend in Erscheinung tritt.

Die Erfindung ist nachfolgend anhand bevorzugter Ausführungsbeispiele unter Bezugnahme auf die Abbildungen noch eingehend veranschaulicht. Dabei zeigt:
- Fig. 1: eine großflächige Anzeigeanordnung
- Fig. 2: einen Ausschnitt aus Fig. 1
- Fig. 3: ein Anzeigeelement mit aufgeteilter Zuleitung
- Fig. 4: eine Gruppe von Elementen nach Fig. 3
- Fig. 5: verschiedene Zuleitungsformen in einer LCD-Zelle

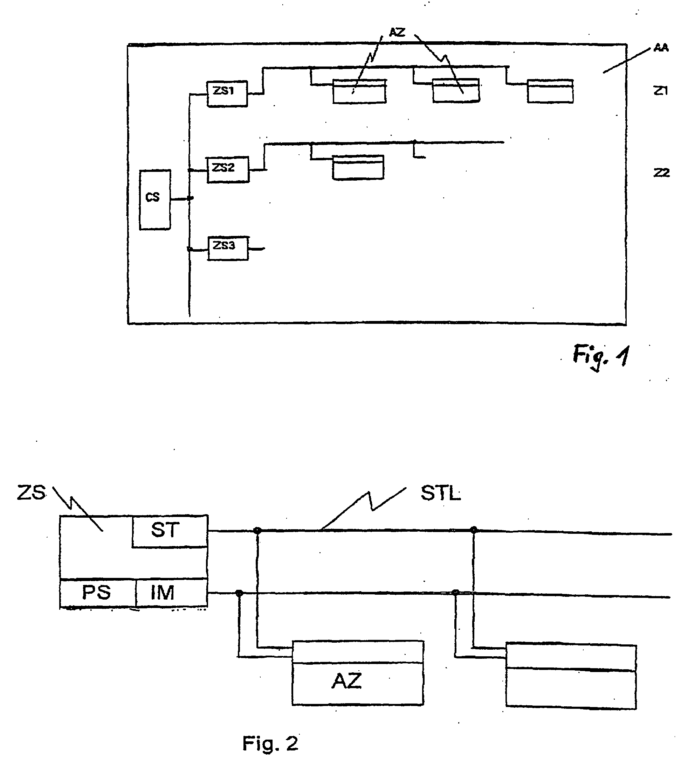

Die in Fig. 1 skizzierte großflächige Anzeigeanordnung AA enthalte beispielsweise eine Mehrzahl von Flüssigkristall-Anzeigezellen AZ (oder auch kurz Anzeigen), die in Zeilen Z1, Z2,... und vorzugsweise untereinander in Spaltenanordnung angeordnet sind. Die einzelnen Anzeigezellen AZ sind in sich wiederum in eine Vielzahl von einzelnen, individuell ansteuerbaren Flächensegmenten unterteilt. Die Anzeigeanordnung enthält in an sich bekannter Weise eine zentrale Steuereinrichtung CS, welche beispielsweise die Bereitstellung von Betriebsspannungen, die koordinierte Steuerung der einzelnen Anzeigesegmente, die Überwachung von Betriebsparametern, den Datenaustausch mit einer entfernten Stelle und dgl. übernimmt. Teile der Aufgaben der zentralen Steuerung CS können in Gruppensteuerungen ZS1, ZS2, ..., die beispielsweise jeweils einer Zeile von Anzeigezellen zugeordnet sind, übertragen sein. Insbesondere kann die Übertragung der Steuerung der einzelnen Segmente auf solche Gruppensteuerungen vorteilhaft sein, da dann die Gruppensteuerungen parallel arbeiten können und die Steuerfolgefrequenz der einzelnen Elemente höher liegt.

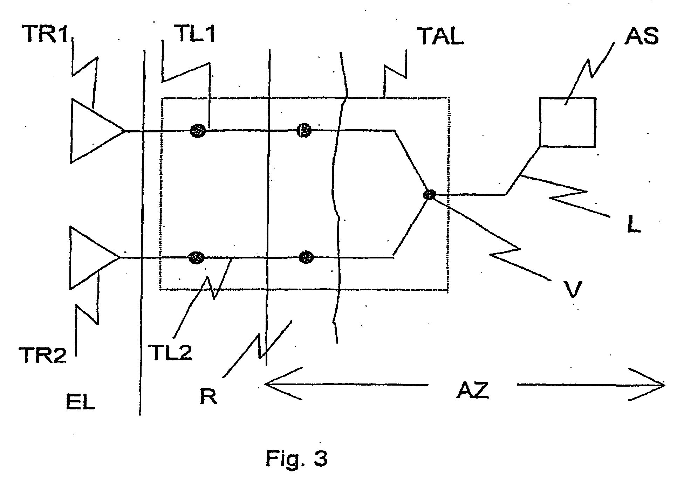

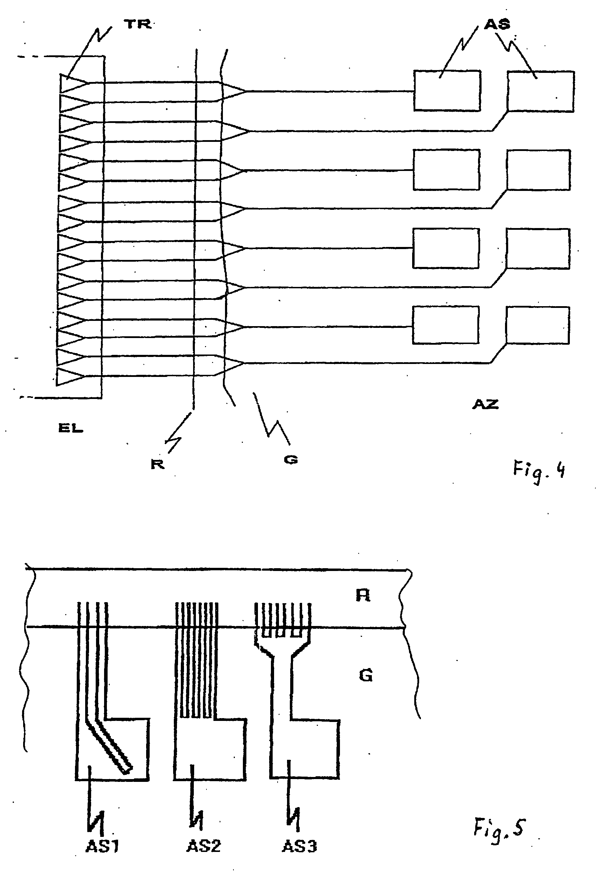

Bei dem in Fig. 2 skizzierten Ausschnitt aus Fig. 1, beispielsweise für eine zeilenweise Zusammenfassung von Anzeigeelementen in mehreren Anzeigen AZ, ist eine Zeilensteuereinrichtung ZS vorgesehen, welche beispielsweise ein Steuermodul ST zur Übertragung der Anzeigeinformation an die einzelnen Anzeigezellen AZ und eine Einrichtung IM zur Messung des mittleren Betriebsstroms aller Anzeigen der Zeile enthält. Die Steuerleitungen SL zur Übertragung der Steuerinformation sowie die Leitungen VL zur Bereitstellung von verschiedenen Betriebsspannungen sind im Regelfall mehradrig. Am Ort der einzelnen Anzeigezellen AZ können vorteilhafterweise noch Schaltkreise angeordnet sein, welche die über die Leitungen STL übertragene Steuerinformation in den einzelnen Segmenten unmittelbar zugeführte Steuersignale umsetzen. Diese elektronischen Schaltkreise am Ort der einzelnen Anzeigezellen sind in den Figuren 3 und 4 mit EL bezeichnet.

Bei der Anordnung nach Fig. 3 ist ein Anzeigesegment AS innerhalb einer Flüssigkristall-Anzeigezelle AZ angenommen, welches über eine Zuleitung L mit einem elektronischen Schaltkreis EL verbunden ist. Die Zuleitung L ist in einem Leitungsabschnitt TAL aufgeteilt in zwei Teilleitungen TL1 und TL2, welche in einem Verbindungspunkt V zusammengeführt sind. Die Teilleitungen TL1 und TL2 seien durch separate Ansteuerungen TR1 und TR2 des elektronischen Schaltkreises EL angesteuert. Der Leitungsabschnitt TAL kann insbesondere alle Leitungszüge zwischen den Ausgängen der Ansteuerungen TR1, TR2 und dem Verbindungspunkt V umfassen, welche Steckverbindungen, Lötpunkte, Klebepunkte, Leitungen unterschiedlichen Typs und unterschiedlicher Materialien umfassen kann. Der Verbindungspunkt V liegt vorzugsweise innerhalb der Flüssigkristall-Anzeigezelle in dem von dem Randbereich R durch eine leicht geschwungene Linie abgetrennt skizzierten geriebenen Bereich eines. die Flächenelektrode des Segments AS tragenden Substrats der Flüssigkristall-Anzeigezelle. Der Verbindungspunkt V stellt dann lediglich eine geometrische Verzweigung einer beispielsweise aus ITO bestehenden Leitungsstruktur ohne Übergang zwischen verschiedenen Materialien dar.

Zur Aktivierung eines Segments AS einer Flüssigkristall-Anzeigezelle wird dieses Segment typischerweise mit einer zwischen zwei Spannungswerten umgeschalteten Steuerspannung beaufschlagt. Bei der skizzierten Anordnung werden für die Ansteuerung des Segments AS die beiden Ansteuerungen TR1, TR2 gleichphasig betrieben, das heißt, daß die Ausgänge der beiden Ansteuerungen auf gleichem Potential liegen, welches gemäß der Betriebsart beispielsweise zwischen zwei Werten umgeschaltet wird. Der mittlere Strom durch die Ansteuerungen ist durch die Leistungsaufnahme des Segments AS und die elektrischen Parameter der Zuleitung bestimmt und liegt typischerweise in der Größenordnung von wenigen µA. Zur Funktionskontrolle des Anzeigesegments AS bzw. dessen Zuleitungsstruktur werden die Ausgänge der beiden Ansteuerungen TR1, TR2 auf verschiedene Potentiale gelegt. Vorzugsweise sind dies die Potentiale, die ohnehin im Rahmen der zyklischen Umschaltung zur Verfügung stehen. Die Ansteuerungen TR1, TR2 sind dann gegenphasig betätigt. In diesem Prüfmodüs liegt zwischen den Ausgängen der Ansteuerungen TR1, TR2 dann jeweils eine Potentialdifferenz und es fließt über die Teilleitung TL1, den Verbindungspunkt V und die Teilleitung TL2, die in diesem Fall als eine Serienschaltung wirken, ein Strom, dessen Höhe durch die Differenz der zur Verfügung stehenden umgeschalteten Spannungen, der Widerstände der Teilleitungen sowie eventuell der Innenwiderstände der Ansteuerungen bestimmt ist. Unter Zugrundelegung gebräuchlicher elektronischer Schaltkreise EL sowie bei bekannten Anordnungen üblicher Dimensionierung der Zuleitungsstruktur kann für den quasi-Kurzschlußstrom bei gegenphasigem Betrieb der Ansteuerungen TR1, TR2 von einem Wert in der Größenordnung von einem bis wenigen mA ausgegangen werden. Unter der Annahme, daß der gesamte mittlere Betriebsstrom einer Zeile oder einer anderen Gruppierung von Anzeigeelementen bei typischer Anzeigendarstellung nicht größer als 50 bis 100 mA ist, kann aus der Differenz des mittleren Betriebsstroms zwischen einer Testsituation und einer Referenzsituation auf die Unversehrtheit der Reihenschaltung der Teilleitungen und der Ansteuerungen geschlossen werden. Je nach Aufbau der Steuerleitungsstruktur zwischen zentraler Elektronik und den Anzeigezellen kann eine solche Prüfung auch andere Abschnitte der Struktur mitumfassen.

Die Zuleitung L kann in dem aufgeteilten Abschnitt TAL auch in mehr als zwei Teilleitungen unterteilt sein, wobei dann vorzugsweise die einzelnen Teilleitungen einzeln geprüft werden. Hierfür wird vorzugsweise die Ansteuerung zu jeder Teilleitung gegenphasig zu den anderen, untereinander gleichphasig betriebenen Ansteuerungen, geschaltet. Bei Anordnungen, bei welchen zur Erbringung der Steuerleistung eines Anzeigesegments bereits mehrere Ansteuerungen notwendig sind, bedeutet die Realisierung der vorstehend beschriebenen bevorzugten Ausführungsform lediglich eine Aufteilung des Zuleitungspfads in zwei oder mehr Teilleitungen und die Verlagerung des Verbindungspunktes in Richtung des Anzeigesegments, beispielsweise wie in Fig. 3 skizziert bis in die Flüssigkristall-Anzeigezelle hinein. In Fig. 4 ist eine Anordnung mit mehreren Anzeigesegmenten AS in einer Flüssigkristall-Anzeigezelle und einem gemeinsamen elektronischen Baustein EL mit einer Mehrzahl von Ansteuerungen skizziert.

In Fig. 5 sind verschiedene Ausführungsformen der Leitungsführung in einer Flüssigkristall-Anzeigezelle skizziert. Bei einem ersten Anzeigesegment ASI ist eine Fortführung der Leitungsaufteilung bis in die Segmentfläche hinein vorgesehen, so daß teilweise auch eine Degradation der Segmentfläche selbst mit überprüft werden kann. Bei dem Segment ASII ist die Aufteilung der Zuleitung bis zum Rand des Segments geführt. Bei der bevorzugten Ausführung des Segments ASIII sind die Teilleitungen bis zum Anfang des geriebenen Bereichs G des die Segmente tragenden Substrats fortgesetzt und dort zusammengeführt zu einer einzigen zum Segment führenden Zuleitung. Diese Ausführungsform ist aufgrund der vereinfachten Leitungsstruktur und des damit verbundenen verringerten Platzbedarfs in der Zelle bevorzugt. Der den Kleberand zwischen den beiden Substraten, Kontaktbereiche, Schaltkreise, etc. tragende Randbereich des Zellensubstrats ist in Fig. 5 mit R bezeichnet.

Für die Auswertung der Fehlerprüfung wird die elektronische Größe, welche zur Prüfung herangezogen ist, bzw. deren Differenz vorzugsweise in einem Analog-Digital-Wandler digitalisiert. Zusätzlich zu der beschriebenen Funktionskontrolle der einzelnen Anzeigeelemente wird vorteilhafterweise auch in an sich gebräuchlicher Art der Datenverkehr der Steuersignale zu den einzelnen Anzeigen durch einen an sich bekannten Rücklesemodus überprüft. Bei Vorhandensein einer Hintergrundbeleuchtung der Anzeige können in gleichfalls bekannter Weise auch Überwachungselemente für die Funktion der Beleuchtungseinrichtungen vorgesehen sein.

Die Erfindung ist nicht auf die beschriebenen Ausführungsformen beschränkt, sondern im Rahmen fachmännischen Könnens auf verschiedene Weise variierbar.

## Patentansprüche

1. Anzeigeanordnung mit einer Mehrzahl individuell ansteuerbarer Anzeigeelemente (AS) und elektronischen Steuer- und Überwachungseinrichtungen (CS; ZS, EL), bei welcher die Zuleitungen zu den einzelnen Anzeigeelementen jeweils in mindestens zwei Teilleitungen (TL1, TL2) aufgeteilt sind, und Prüfeinrichtungen Mittel umfassen, welche das Bestehen einer elektrischen Reihenschaltung zweier Teilleitungen eines Anzeigeelements überprüfen, **gekennzeichnet durch** eine Ansteuerung (EL) mit je einem Ausgang (TR1, TR2) für jede Teilleitung (TL1, TL2) eines Anzeigeelements (AS), wobei die Ausgänge im Anzeige-Ansteuerbetrieb parallel, im Prüfbetrieb in Reihe schaltbar sind.

2. Anordnung nach Anspruch 1, **dadurch gekennzeichnet, daß** die Prüfeinrichtungen bei der Prüfung die Charakteristik der Reihenschaltung der Teilleitungen (TL1, TL2) detektieren.

3. Anordnung nach einem der Ansprüche 1 oder 2, **dadurch gekennzeichnet, daß** das Anzeigeelement (AS) ein Segment einer Flüssigkristall-Anzeige ist.

4. Anordnung nach Anspruch 3, **dadurch gekennzeichnet, daß** sich der Leitungsabschnitt (TAL) mit den parallel geschalteten Teilleitungen (TL1, TL2) bis in die Anzeige (AZ), vorzugsweise bis in den geriebenen Bereich (G) eines Substrats der Anzeige erstreckt.

5. Anordnung nach Anspruch 4, **dadurch gekennzeichnet, daß** sich der Leitungsabschnitt mit den parallelen Teilleitungen bis in ein Anzeigeelement (AS1) hinein erstreckt.

6. Anordnung nach einem der Ansprüche 3 bis 5, **dadurch gekennzeichnet, daß** an ein zu prüfendes Segment als einziges eine Spannung angelegt wird, und die Potentiale der übrigen Segmente und der Rückelektrode auf gleiches Potential gelegt sind.

7. Anordnung nach einem der Ansprüche 1 bis 6, **dadurch gekennzeichnet, daß** die Anzeigeanordnung in Gruppen mit jeweils mehreren Anzeigeelementen aufgeteilt ist und jede Gruppe separate Prüfeinrichtungen enthält.

8. Anordnung nach einem der Ansprüche 1 bis 7, **dadurch gekennzeichnet, daß** die Prüfeinrichtungen die zugeordneten Anzeigeelemente zeitlich nacheinander einzeln einer Funktionskontrolle unterziehen.

9. Anordnung nach Ansprüch 8, **dadurch gekennzeichnet, daß** die Funktionskontrolle außerhalb oder vorzugsweise während des Anzeigebetriebs durchgeführt wird.

10. Anordnung nach einem der Ansprüche 1 bis 9, **dadurch gekennzeichnet, daß** die Prüfeinrichtungen einen in der Prüfphase bestimmten Wert einer elektrischen Größe mit einem Referenzwert vergleichen.

11. Anordnung nach Anspruch 10, **dadurch gekennzeichnet, daß** der Referenzwert ein in einer Betriebsphase gewonnener Meßwert der elektrischen Größe ist.

12. Anordnung nach Anspruch 10 oder 11, **dadurch gekennzeichnet, daß** als elektrische Größe ein Betriebsstrom einer Mehrzahl von Anzeigeelementen bestimmt wird.

13. Anordnung nach Anspruch 12, **dadurch gekennzeichnet, daß** die Prüfeinrichtungen die Differenz des Betriebsstroms zwischen einem Wert zu einem Betriebszustand und einem Wert zu einem Prüfzustand auswerten.

14. Anordnung nach Anspruch 13, **dadurch gekennzeichnet, daß** Prüfzustand und verglichener Betriebszustand zeitlich unmittelbar aufeinanderfolgen und/oder mit Ausnahme des geprüften Anzeigeelements dasselbe Anzeigemuster aufweisen.

15. Anordnung nach einem der Ansprüche 1 bis 14, **dadurch gekennzeichnet, daß** bei in mehr als zwei Teilleitungen aufgeteilten Zuleitungen jede der Zuleitungen einzeln geprüft wird.

16. Anordnung nach einem der Ansprüche 1 bis 15, **dadurch gekennzeichnet, daß** die Ergebnisse der Funktionskontrolle an eine entfernte Auswertstelle übertragbar sind.

17. Anordnung nach einem der Ansprüche 1 bis 16, **dadurch gekennzeichnet, daß** die Steuerung der Anzeigeanordnung detektierte defekte Anzeigesegmente mit berücksichtigt.

18. Anordnung nach einem der Ansprüche 1 bis 17, **dadurch gekennzeichnet, daß** die Prüfeinrichtungen für die Bewertung von detektierten Defekten die Prüfbefunde von benachbarten Zuleitungen mit berücksichtigen.

## Claims

1. Display arrangement having a plurality of individually drivable display elements (AS) and electronic control and monitoring devices (CS; ZS, EL), in which the leads to the individual display elements are each divided into at least two partial lines (TL1, TL2), and test devices comprise means which check the existence of an electrical series circuit of two partial lines of a display element, **characterized by** a drive unit (EL) with a respective output (TR1, TR2) for each partial line (TL1, TL2) of a display element (AS), the outputs being able to be connected in parallel in the display drive mode and in series in the test mode.

2. Arrangement according to Claim 1, **characterized in that** the test devices detect the characteristic of the series circuit of the partial lines (TL1, TL2) during testing.

3. Arrangement according to either of Claims 1 and 2, **characterized in that** the display element (AS) is a segment of a liquid-crystal display.

4. Arrangement according to Claim 3, **characterized in that** the line section (TAL) with the partial lines (TL1, TL2) connected in parallel extends right into the display (AZ), preferably right into the rubbed region (G) of a substrate of the display.

5. Arrangement according to Claim 4, **characterized in that** the line section with the parallel partial lines extends right into a display element (AS1).

6. Arrangement according to one of Claims 3 to 5, **characterized in that** a voltage is applied solely to a segment to be tested, and the potentials of the remaining segments and of the back electrode are put at the same potential.

7. Arrangement according to one of Claims 1 to 6, **characterized in that** the display arrangement is divided into groups each having a plurality of display elements and each group contains separate test devices.

8. Arrangement according to one of Claims 1 to 7, **characterized in that** the test devices subject the assigned display elements individually to functional checking in temporal succession.

9. Arrangement according to Claim 8, **characterized in that** the functional checking is carried out outside or preferably during the display mode.

10. Arrangement according to one of Claims 1 to 9, **characterized in that** the test devices compare a value of an electrical quantity which is determined in the test phase with a reference value.

11. Arrangement according to Claim 10, **characterized in that** the reference value is a measured value of the electrical quantity which is obtained in an operating phase.

12. Arrangement according to Claim 10 or 11, **characterized in that** an operating current of a plurality of display elements is determined as the electrical quantity.

13. Arrangement according to Claim 12, **characterized in that** the test devices evaluate the difference in the operating current between a value for an operating state and a value for a test state.

14. Arrangement according to Claim 13, **characterized in that** test state and compared operating state directly succeed one another temporally and/or have the same display pattern with the exception of the tested display element.

15. Arrangement according to one of Claims 1 to 14, **characterized in that**, in the case of leads divided into more than two partial lines, each of the leads is tested individually.

16. Arrangement according to one of Claims 1 to 15, **characterized in that** the results of the functional checking can be transmitted to a remote evaluation station.

17. Arrangement according to one of Claims 1 to 16, **characterized in that** the control of the display arrangement concomitantly takes account of defective display segments that are detected.

18. Arrangement according to one of Claims 1 to 17, **characterized in that**, for the assessment of detected defects, the test devices concomitantly take account of the test findings of adjacent leads.

## Revendications

1. Agencement d'affichage présentant une pluralité d'éléments d'affichage (AS) aptes à être commandés individuellement et des dispositifs électroniques de commande et de surveillance (CS; ZS, EL), dans lequel les conducteurs conduisant vers les éléments d'affichage individuels sont divisés chacun en au moins deux conducteurs partiels (TL1, TL2), et des dispositifs de vérification comprennent des moyens qui vérifient l'existence d'un branchement électrique en série entre deux conducteurs partiels d'un élément d'affichage, **caractérisé par** une commande (EL) présentant une sortie (TR1, TR2) pour chaque conducteur partiel (TL1, TL2) d'un élément d'affichage (AS), les sorties pouvant être branchées en parallèle en fonctionnement de commande de l'affichage et en série en fonctionnement de vérification.

2. Agencement selon la revendication 1, **caractérisé en ce que** lors de la vérification, les dispositifs de vérification détectent la caractéristique du circuit en série des conducteurs partiels (TL1, TL2).

3. Agencement selon l'une des revendications 1 ou 2, **caractérisé en ce que** l'élément d'affichage (AS) est un segment d'un affichage à cristaux liquides.

4. Agencement selon la revendication 3, **caractérisé en ce que** la partie de conducteur (TAL) comportant les conducteurs partiels (TL1, TL2) branchés en parallèle s'étend jusque dans l'affichage (AZ), de préférence jusque dans la partie râpée (G) d'un substrat de l'affichage.

5. Agencement selon la revendication 4, **caractérisé en ce que** la partie de conducteur présentant les conducteurs partiels parallèles s'étend jusque dans un élément d'affichage (AS1).

6. Agencement selon l'une des revendications 3 à 5, **caractérisé en en ce qu'**une tension est appliquée sur un segment à vérifier isolément, et les potentiels des autres segments et de l'électrode de dos sont placés au même potentiel.

7. Agencement selon l'une des revendications 1 à 6, **caractérisé en ce que** l'agencement d'affichage est divisé en groupes présentant chacun plusieurs éléments d'affichage, et chaque groupe contient des dispositifs de vérification séparés.

8. Agencement selon l'une des revendications 1 à 7, charactérisé en ce que les dispositifs de vérification soumettent successivement et l'un après l'autre les éléments d'affichage qui leur sont associés à un contrôle du fonctionnement.

9. Agencement selon la revendication 8, **caractérisé en ce que** le contrôle du fonctionnement est exécuté en dehors ou de préférence pendant le fonctionnement de l'affichage.

10. Agencement selon l'une des revendications 1 à 9, **caractérisé en ce que** les dispositifs de vérification comparent à une valeur de référence une valeur d'une grandeur électrique déterminée pendant la phase de vérification.

11. Agencement selon la revendication 10, **caractérisé en ce que** la valeur de référence est une valeur de mesure de la grandeur électrique obtenue pendant une phase de fonctionnement.

12. Agencement selon la revendication 10 ou 11, **caractérisé en ce que** comme grandeur électrique, on détermine un courant de fonctionnement d'une pluralité d'éléments d'affichage.

13. Agencement selon la revendication 12, **caractérisé en ce que** les dispositifs de vérification évaluent la différence entre une valeur du courant de fonctionnement dans un état de fonctionnement et une valeur du courant de fonctionnement pendant une situation de vérification.

14. Agencement selon la revendication 13, **caractérisé en ce que** l'état de vérification et l'état de fonctionnement qui lui est comparé se succèdent directement et/ou présentent le même motif d'affichage, à l'exception de l'élément d'affichage vérifié.

15. Agencement selon l'une des revendications 1 à 14, **caractérisé en ce qu'**au cas où des conducteurs sont divisés en plus de deux conducteurs partiels, chacun des conducteurs est vérifié individuellement.

16. Agencement selon l'une des revendications 1 à 15, **caractérisé en ce que** les résultats du contrôle de fonctionnement peuvent être transmis à un site d'évaluation distant.

17. Agencement selon l'une des revendications 1 à 16, **caractérisé en ce que** la commande de l'agencement d'affichage tient compte des segments d'affichage défectueux détectés.

18. Agencement selon l'une des revendications 1 à 17, **caractérisé en ce que** les dispositifs de vérification pour l'évaluation de défauts détectés tiennent compte des résultats de vérification de conducteurs voisins.
